Europäisches Patentamt

European Patent Office

Office européen des brevets

(11) Publication number: **0 157 655**
**B1**

# EUROPEAN PATENT SPECIFICATION

(45) Date of publication of patent specification: **18.10.89**

(51) Int. Cl.[4]: **C 08 L 51/06**

(21) Application number: **85302440.4**

(22) Date of filing: **04.04.85**

(54) Transparent resin compositions.

(30) Priority: **05.04.84 JP 68228/84**

(43) Date of publication of application:
**09.10.85 Bulletin 85/41**

(45) Publication of the grant of the patent:
**18.10.89 Bulletin 89/42**

(84) Designated Contracting States:
**BE DE FR GB NL**

(56) References cited:
**PATENT ABSTRACTS OF JAPAN, vol. 8, no. 7
(C-204)1444r, 12th January 1984; & JP-A-58 176
252 (ASAHI KASEI KOGYO K.K.) 15-10-1983**

(73) Proprietor: **MITSUBISHI PETROCHEMICAL CO.,
LTD.
5-2, 2-chome, Marunouchi
Chiyoda-ku Tokyo 100 (JP)**

(72) Inventor: **Hattori, Masafumi
c/o Mitsubishi Petrochemical Co., Ltd. 1, Toho-
cho
Yokkaichi-shi Mie (JP)**
Inventor: **Inoue, Takayuki
c/o Mitsubishi Petrochemical Co., Ltd. 1, Toho-
cho
Yokkaichi-shi Mie (JP)**
Inventor: **Ochiumi, Masahide
c/o Mitsubishi Petrochemical Co., Ltd. 1, Toho-
cho
Yokkaichi-shi Mie (JP)**

(74) Representative: **Moore, Anthony John et al
Gee & Co. Chancery House Chancery Lane
London WC2A 1QU (GB)**

Courier Press, Leamington Spa, England.

# EP 0 157 655 B1

**Description**

This invention relates to transparent resin compositions having improved transparency.

Saponified ethylene/vinyl acetate copolymers (hereinafter referred to as "saponified EVA") are widely used as material from which to manufacture wrapping films, bottles, cups and trays for packaging foodstuffs and medicines, because of their good gas barrier properties, moldability, transparency and low water absorption which is lower than that of polyvinyl alcohol. However, saponified EVA is rarely used in the form of a single layer because of its high moisture permeability and the deterioration in its oxygen barrier properties under conditions of high humidity, and is usually used in a multi-layer form in combination with polyolefin which has high moisture barrier properties, for example, as a co-extruded or extrusion laminated product.

In the production of packaging having such a multi-layer structure, waste that cannot be utilized, such as trimming waste and extrusion waste, is inevitably formed. In some cases, the proportion of such waste reaches about 50%.

For the above reasons, packaging in the form of such multi-layered films and containers has undesirably high production costs and its application is often limited, although it does have properties which are very useful. Development of a technique which permits the utilization of such wastes is, therefore, very desirable.

When trimming waste, extrusion waste or the like of a multi-layered combination of polyolefin and saponified EVA is merely mixed and extruded, a uniform mixture cannot be obtained because of the very poor compatibility of these two resins and layer separation tends to occur; the resulting molded article thus has very poor mechanical strength and transparency. For this reason, if the thus-formed composition is coextruded as a layer of for example, a multi-layer film, a product having satisfactory transparency, moldability, mechanical strength and moisture barrier properties, which are required of a packaging material, cannot be obtained, and such a product has very low practical value: of these disadvantages, poor transparency is the most serious.

It is an aim of the present invention to provide a resin composition in which trimming waste, extrusion waste and the like, are effectively utilized, and which is suitable for use as a layer of a multi-layered packaging material satisfying the above-described requirements.

According to the present invention there is provided a transparent resin composition comprising (1) from 65 to 99.9 parts by weight of a modified polyolefin which is at least partially modified with an unsaturated carboxylic acid or the anhydride thereof and has an unsaturated carboxylic acid or anhydride content of from 0.002 to 5 wt%; (2) from 35 to 0.1 parts by weight of a saponified ethylene/vinyl acetate copolymer having an ethylene content of from 25 to 75 mol% and a degree of saponification of at least 96%; and (3) from 0.5 to 200 parts by weight of a plasticizer per 100 parts by weight of the saponified ethylene/vinyl acetate copolymer.

Suitable examples of the polyolefin for modification are a homo- or copolymer of an α-olefin having from 2 to 12 carbon atoms, such as ethylene, propylene, butene-1, hexene-1 or 4-methylpentene-1, and a copolymer of such an α-olefin and an unsaturated monomer other than the α-olefin, such as a vinyl ester (e.g., vinyl acetate), or a derivative of an unsaturated carboxylic acid other than the unsaturated carboxylic acid itself or an anhydride thereof (e.g., an ester such as ethyl acrylate or methyl methacrylate, an amide or an imide, or a salt thereof). Such a copolymer may be a graft copolymer, a block copolymer or a random copolymer. The α-olefin content in the copolymer should be at least about 50 wt% and preferably at least 70 wt%.

The polyolefion may be used alone or as a mixture thereof.

Suitable examples of the unsaturated carboxylic acid or the anhydride thereof which can be used for the modification of the polyolefin are acrylic acid, methacrylic acid, cinnamic acid, maleic acid, fumaric acid, itaconic anhydride: of these compounds, acrylic acid and maleic anhydride are preferred, with maleic anhydride being particularly preferred.

Graft modification of the polyolefin with the unsaturated carboxylic acid or the anhydride thereof may be carried out by a conventional technique, such as that in which the polyolefin is rendered into a solubilised slate and the unsaturated carboxylic acid or the anhydride thereof is introduced thereinto using a peroxide or the like; or that in which the unsaturated carboxylic acid or the anhydride thereof is introduced into the polyolefin in a molten state again using a peroxide or the like.

The unsaturated carboxylic acid or the anhydride thereof content in the modified polyolefin is from 0.002 to 5% by weight and is preferably from 0.004 to 1% by weight. If the content thereof is less than 0.002% by weight, the effect of improving the transparency of the composition is insufficient: and if the content thereof is more than 5% by weight, the mechanical strength of the composition deteriorates and, moreover, the use of such a large amount thereof is economically disadvantageous.

The modified polyolefin having such an unsaturated carboxylic acid or the anhydride thereof content in the above range can easily be obtained by diluting a modified polyolefin, into which a large amount of the unsaturated carboxylic acid or the anhydride thereof has been introduced, with an unmodified polyolefin or by melt-kneading a multi-layered material including such a modified polyolefin layer with an unmodified polyolefin.

The saponified EVA as used herein has an ethylene content of from 25 to 75 mol%, preferably from 26

2

to 45 mol% and a degree of saponification of at least 96%, preferably at least 98%. If the ethylene content is less than 25 mol%, the saponified EVA easily absorbs moisture and the moisture dependency of oxygen permeability is increased. On the other hand, if the ethylene content is more than 75 mol%, the oxygen permeability is undesirably increased. If the degree of saponification is less than 96%, the moisture barrier properties are seriously deficient and the moisture dependence of oxygen permeability is undesirably increased.

From the standpoint of moldability, it is preferred that the saponified EVA has a melt flow rate (MFR) measured according to ASTM-D569-59 (190°C, 2160 g load) of from 0.1 to 20 g/10 min. Further, it is preferred that the melting point of the saponified EVA is higher than that of the polyolefin because the effects of the present invention are thereby exhibited more strongly.

Plasticizers which are used in the present invention are compounds conventionally known as plasticizers for saponified EVA. Suitable examples of these plasticizers are a polyhydric alcohol such as glycerine, ethylene glycol, pentaerythritol or propylene glycol; a phosphoric acid ester such as triethyl phosphate, trioctyl phosphate or mono-ethyl-di-8-hydroxy-3,6-dioxaoctyl phosphate; an ethanolamine derivative such as ethanol acetamide, ethanol formamide or triethanolamine acetate; and a carboxylic acid ester such as succinic acid mono ($\beta,\gamma$-dihydroxypropyl)monocellosolve ester or glycolic acid ($\beta,\gamma$-dihydroxypropyl) ester. Of these compounds, glycerine, triethanolamine, polyethylene glycol and polyethylene glycol glyceryl ether are particularly preferred.

The proportion of the modified polyolefin in the resin composition is from 65 to 99.9 parts by weight and preferably from 70 to 99 parts by weight, and the proportion of the saponified EVA therein is from 35 to 0.1 parts by weight and preferably from 30 to 1 parts by weight. The amount of the plasticizer added is from 0.5 to 200 parts by weight, preferably from 1 to 100 parts by weight, and more preferably from 1 to 50 parts by weight, per 100 parts by weight of the saponified EVA. If the proportion of the modified polyolefin is less than 65 parts by weight, the transparency of the composition cannot be improved. On the other hand, if the proportion thereof is more than 99.9 parts by weight, the mechanical strength of the composition is seriously reduced and the addition of the modified polyolefin in such large amounts is undesirable from an economic standpoint.

If the proportion of the saponified EVA is less than 0.1 part by weight, the transparency of the composition will be sufficiently good for it to be unnecessary to apply the present invention. On the other hand, if the proportion thereof is more than 35 parts by weight, the transparency will not be improved sufficiently.

If the amount of the plasticizer added is less than 0.5 part by weight per 100 parts by weight of the saponified EVA, the transparency will not be improved sufficiently. On the other hand, if the amount thereof is more than 200 parts by weight, oozing out and reduction in mechanical strength undesirably occur.

The resin composition of the present invention may contain, as well as the above-described components, other resin and rubber components, and additives such as a stabilizer, a nucleating agent, a coloring agent and a lubricant in amounts not impairing the effects of the present invention.

The resin compositions of the present invention may be prepared by melt-kneading the above-described components in a conventional kneader. Furthermore, the resin compositions of the present invention may also be prepared by compounding and melt-kneading trimming waste, extrusion waste and the like from multi-layered materials and the necessary and any desired components.

The resin compositions of the present invention also have adhesive properties and can be used as an intermediate layer in a multi-layer laminate such as a laminate comprising a polyolefin layer/a layer of the resin composition of the present invention/a saponified EVA layer, or a laminate comprising a polyolefin layer/a layer of the resin composition of the present invention/another adhesive resin layer/a saponified EVA layer, without impairing the luster, transparency, mechanical strength and moisture barrier properties of the polyolefin layer, and the gas barrier properties of the saponified EVA layer. This effect is more remarkable in the latter multi-layer laminate.

The present invention is described in greater detail by reference to the following Examples and the Comparative Examples.

### Examples 1 to 7, and Comparative Examples 1 to 3

To 100 parts by weight of trimming wastes (the composition is shown in Table 1) of a coextruded five-layer sheet comprising a 400 µ thick layer of polypropylene, a 50 µ thick layer of a modified polypropylene having a maleic anhydride content of 0.2 wt%, a 60 µ thick layer of saponified EVA ("EVAL EPF", produced by Kuraray Co., Ltd.; MFR 1.3 g/10 min.), a 50 µ thick layer of the same modified polypropylene as above, and a 460 µ thick layer of polypropylene, was added a plasticizer for the saponified EVA as shown in Table 1, and the resulting mixture was melt kneaded at 200°C and molded in a 1 mm thick sheet.

A cup with an opening of 125 mm × 95 mm and a depth of 60 mm was produced by solid phase pressure forming process (SPPF) from the above-produced sheet at a surface temperature of 145°C. The transparency of the side wall of the cup was visually examined and the internal haze thereof was measured. The results obtained are shown in Table 1.

Table 1

| | Composition of Melt-Kneaded Wastes | | | | | Plasticizer | | Evaluation | |
| | Modified Polypropylene | | Saponified EVA | | | | | | |
| | Maleic Anhydride Content (wt%) | Amount (wt%) | $C_2$ Content (mol%) | Degree of Saponification (%) | Amount (wt%) | Type | Amount *1 (parts by weight) | Transparency (visually judged) | Internal Haze (%) |
|---|---|---|---|---|---|---|---|---|---|
| Comparative Example 1 | 0.02 | 92 | 32 | 99 | 8 | -- | -- | Extremely poor | >83 |
| " 2 | " | " | " | " | " | Glycerine | 0.1 | Poor | 70 |
| Example 1 | " | " | " | " | " | " | 1 | Good | 10 |
| " 2 | " | " | " | " | " | " | 6 | Excellent | 5 |
| " 3 | " | " | " | " | " | " | 100 | Good | 12 |
| " 4 | " | " | " | " | " | " | 180 | Good | 30 |
| Comparative Example 3 | " | " | " | " | " | " | 220 | Slightly poor | 60 |
| Example 5 | " | " | " | " | " | TEA | 62.5 | Fairly good | 17 |
| " 6 | " | " | " | " | " | PEG | 12.5 | Good | 46 |
| " 7 | " | " | " | " | " | PEGGE | 12.5 | Excellent | 5 |

Notes: *1: Amount per 100 parts by weight of saponified EVA.

In Comparative Example 1, delamination occurred.

In Comparative Example 3, when the cup was allowed to stand at 60°C, the plasticizer oozed out. Kneadability was poor.

The symbols used in the column of plasticizers are as follows:

TEA: Triethanolamine

PEG: Polyethylene glycol (molecular weight: 200)

PEGGE: Polyethylene glycol glyceryl ether

EP 0 157 655 B1

Examples 8 and 9, and Comparative Examples 4 and 5

A composition as shown in Table 2 was melt-kneaded and pelletized at 210°C using an extruder having a diameter of 40 mm and L/D=28. These pellets were press molded into a 1 mm thick sheet at 200°C. Using this sheet, a cup was produced by SPPF process at a surface temperature of 145°C in the same manner as in Example 1. The transparency of the side wall of the cup was visually measured and the internal haze thereof was measured. The cup was also subjected to a bending test.

In the bending test, a test piece from the side wall of the cup was bent crosswise ten times and, thereafter, layer separation was examined. The rating scale was as follows:

A: No layer separation occurred.
B: Layer separation occurred to a slight extent.
C: Layer separation occurred.
D: Layer separation occurred seriously.

The saponified EVA used in Examples 8 and 9 was the same as used in Example 1. The polyvinyl alcohol used in Comparative Examples 4 and 5 was "PVA-NK05" produced by Nippon Gosei Co., Ltd.; the modified polypropylene was a polymer on which 0.2 wt% of maleic anhydride was grafted.

Table 2

| Composition: | Example | | Comparative Example | |
|---|---|---|---|---|
| | 8 | 9 | 4 | 5 |
| Polypropylene[*] | | | | |
|    Amount (wt%) | 82 | 64 | 82 | 64 |
| Modified Polypropylene | | | | |
|    Maleic Anhydride Content (wt%) | 0.2 | 0.2 | 0.2 | 0.2 |
|    Amount (wt%) | 10 | 20 | 10 | 20 |
| Saponified EVA (PVA) | | | | |
|    $C_2$ Content (mol%) | 32 | 32 | 0 | 0 |
|    Degree of Saponification (%) | 99 | 99 | 78 | 78 |
|    Amount (wt%) | 8 | 16 | 8 | 16 |
| Plasticizer | | | | |
|    Type | Glycerine | Glycerine | Glycerine | Glycerine |
|    Amount (parts by weight)[**] | 6 | 6 | 6 | 6 |
| Evaluation: | | | | |
| Transparency (visually) | Excellent | Good | Slightly Poor | Poor |
| Internal Haze (%) | 7 | 17.1 | 15 | 30 |
| Bending Test | A | A | C | D |

Notes:    [*]:  "MA6" produced by Mitsubishi Petrochemical Co., Ltd.

          [**]:  Amount per 100 parts by weight of saponified EVA.

EP 0 157 655 B1

Examples 10 to 14, and
Comparative Examples 6 and 7

A cup was produced in the same manner as in Example 8 using the same components as used in Example 8 but in the composition ratio as shown in Table 3. The cup thus produced was evaluated in the same manner as in Example 8. The results obtained are shown in Table 3.

Table 3

| | Example 10 | Comparative Example 6 | Example 11 | Example 12 | Example 13 | Example 14 | Comparative Example 7 |
|---|---|---|---|---|---|---|---|
| Composition (parts by weight): | | | | | | | |
| MA6 | 64 | 84 | 83.2 | 82 | 76 | 22 | — |
| Modified Poly-propylene | 20 | — | 0.8 | 2 | 8 | 48 | 60 |
| EVAL-EPF | 16 | 16 | 16 | 16 | 16 | 30 | 40 |
| Glycerine* | 6 | 6 | 6 | 6 | 6 | 12 | 15 |
| Evaluation: | | | | | | | |
| Transparency (visually) | Excellent | Poor | Fairly Good | Good | Excellent | Good | Poor |
| Internal Haze (%) | 17 | 60 | 56 | 30 | 23 | 30 | 65 |

Note:   *   Amount per 100 parts by weight of EVAL-EPF.

EP 0 157 655 B1

Reference Example 1

A three-layer sheet was coextruded, in which one layer was made of a composition prepared from trimming wastes of the same five-layer sheet as used in Example 2 and a plasticizer. This sheet had the layer structure of a 200 μ thick layer of polypropylene, a 200 μ thick layer of the above composition and a 60 μ thick layer of saponified EVA.

Using the three-layer sheet, a cup was produced and evaluated in the same manner as in Example 2. It was found that the cup had satisfactory transparency, gas barrier properties, stiffness, impact resistance and moisture barrier properties.

Reference Example 2

A four-layer sheet was coextruded, in which one layer was made of a composition prepared from trimming wastes of the same five-layer sheet as used in Example 2 and a plasticizer. This sheet had the layer structure of a 200 μ thick layer of polypropylene, a 200 μ thick layer of the above composition, a 50 μ thick layer of a modified polypropylene having a maleic anhydride content of 0.2 wt% and a 60 μ thick layer of saponified EVA.

Using the four-layer sheet, a cup was produced and evaluated in the same manner as in Example 2. It was found that the cup had the same satisfactory performance as the cup produced in Reference Example 2.

Reference Example 3

A seven-layer sheet was coextruded, in which one layer was made of a composition prepared from trimming wastes of the same five-layer sheet as used in Example 2 and a plasticizer. This sheet had the layer structure of a 200 μ thick layer of polypropylene, a 200 μ thick layer of the above composition, a 50 μ thick layer of a modified polypropylene having a maleic anhydride content of 0.2 wt%, a 60 μ thick layer of saponified EVA, a 50 μ thick layer of the same modified polypropylene layer as above, a 200 μ thick layer of the above composition, and a 240 μ thick layer of polypropylene.

Using the seven-layer sheet, a cup was produced and evaluated in the same manner as in Example 2. It was found that the cup had same satisfactory performance as the cup produced in Reference Example 2.

## Claims

1. A transparent resin composition comprising

(1) from 65 to 99.9 parts by weight of a polyolefin which is at least partially modified with an unsaturated carboxylic acid or the anhydride thereof and has an unsaturated carboxylic acid or anhydride content of from 0.002 to 5 wt%.

(2) from 35 to 0.1 parts by weight of a saponified ethylene/vinyl acetate copolymer having an ethylene content of from 25 to 75 mol% and a degree of saponification of at least 96%; and

(3) from 0.5 to 200 parts by weight of a plastici zer per 100 parts by weight of the saponified ethylene/ vinyl acetate copolymer.

2. A composition as claimed in Claim 1, wherein the polyolefion (1) has an α-olefin content of at least 70% by weight.

3. A composition as claimed in Claim 1 or 2, wherein the unsaturated carboxylic acid or the anhydride thereof is acrylic acid or maleic anhydride.

4. A composition as claimed in any preceding Claim, wherein the unsaturated carboxylic acid or anhydride content is from 0.004 to 1 wt%.

5. A composition as claimed in any preceding Claim, wherein the saponified ethylene/vinyl acetate copolymer (2) has an ethylene content of from 26 to 45 mol% and a degree of saponification of at least 98%.

6. A composition as claimed in any preceding Claim, wherein the saponified ethylene/vinyl acetate copolymer (2) has a melt flow rate measured according to ASTM-D569-59 (190°C, 2160 g load) of from 0.1 to 20 g/10 min.

7. A composition as claimed in any preceding Claim, wherein the saponified ethylene/vinyl acetate copolymer (2) has a melting point higher than that of the polyolefin.

8. A composition as claimed in any preceding Claim, wherein the plasticizer (3) is selected from glycerine, triethanolamine, polyethylene glycol and polyethylene glycol glyceryl ether.

9. A composition as claimed in any preceding Claim, wherein there are present from 70 to 99 parts by weight of the modified polyolefion (1), from 30 to 1 parts by weight of the saponified ethylene/vinyl acetate copolymer (2), and from 1 to 100 parts by weight of the plasticizer (3) per 100 parts by weight of the saponified ethylene/vinyl acetate copolymer (2).

10. A composition as claimed in Claim 9, wherein the amount of plasticizer (3) is from 1 to 50 parts by weight per 100 parts by weight of the saponified ethylene/vinyl acetate copolymer (2).

## Patentansprüche

1. Transparente Harzzusammensetzung, umfassend

(1) 65 bis 99,9 Gewichtsteile eines Polyolefins, das mindestens teilweise modifiziert ist mit einer ungesättigten Carbonsäure oder deren Anhydrid und einen Gehalt an ungesättigter Carbonsäure oder Anhydrid von 0,002 bis 5 Gew.-% besitzt,

(2) 35 bis 0,1 Gewichtsteile eines verseiften Ethylen/Vinylacetat-Copolymeren mit einem Ethylengehalt von 25 bis 75 Mol-% und einem Verseifungsgrad von mindestens 96%; und

(3) 0,5 bis 200 Gewichtsteile eines Weichmachers pro 100 Gewichtsteile des verseiften Ethylen/Vinylacetat-Copolymeren.

2. Zusammensetzung nach Anspruch 1, wobei das Polyolefin (1) einen α-Olefingehalt von mindestens 70 Gew.-% besitzt.

3. Zusammensetzung nach Anspruch 1 oder 2, wobei die ungesättigte Carbonsäure oder deren Anhydrid Acrylsäure oder Maleinsäureanhydrid ist.

4. Zusammensetzung nach mindestens einem der vorangehenden Ansprüche, wobei der Gehalt an ungesättigter Carbonsäure oder Anhydrid 0,004 bis 1 Gew.-% beträgt.

5. Zusammensetzung nach mindestens einem der vorangehenden Ansprüche, wobei das verseifte Ethylen/Vinylacetat-Copolymer (2) einen Ethylengehalt von 26 bis 45 Mol-% und einen Verseifungsgrad von mindestens 98% besitzt.

6. Zusammensetzung nach mindestens einem der vorangehenden Ansprüche, wobei das verseifte Ethylen/Vinylacetat-Copolymer (2) eine Schmelzflußrate, gemessen gemäß ASTM-D569-59 (190°C, 2160 g Belastung) von 0,1 bis 20 g/10 min besitzt.

7. Zusammensetzung nach mindestens einem der vorangehenden Ansprüche, wobei das verseifte Ethylen/Vinylacetat-Copolymer (2) einen Schmelzpunkt besitzt, der höher als der des Polyolefins ist.

8. Zusammensetzung nach mindestens einem der vorangehenden Ansprüche, wobei der Weichmacher (3) aus Glycerin, Triethanolamin, Polyethylenglykol und Polyethylenglykolglycerylether gewählt ist.

9. Zusammensetzung nach mindestens einem der vorangehenden Ansprüche, wobei 70 bis 99 Gewichtsteile des modifizierten Polyolefins (1), 30 bis 1 Gewichtsteile des verseiften Ethylen/Vinylacetat-Copolymeren (2), und 1 bis 100 Gewichtsteile des Weichmachers (3) pro 100 Gewichtsteile des verseiften Ethylen/Vinylacetat-Copolymeren (2) vorliegen.

10. Zusammensetzung nach Anspruch 9, wobei die Menge des Weichmachers (3) 1 bis 50 Gewichtsteile pro 100 Gewichtsteile des verseiften Ethylen/Vinylacetat-Copolymeren (2) beträgt.

## Revendications

1. Compositions de résines transparentes comprenant:

(1) de 65 à 99,9 parties en poids d'une polyoléfine qui est au moins partiellement modifiée par un acide carboxylique insaturé ou son anhydride et qui comporte 0,002 à 5% en poids de cet acide carboxylique insaturé ou de son anhydride.

(2) de 35 à 0,1 parties en poids d'un copolymère acétate de vinyle/éthylène saponifié ayant 25 à 75 moles % d'éthylène et un degré de saponification d'au moins 96%, et

(3) de 0,5 à 200 parties en poids d'un plastifiant pour 100 parties en poids du copolymère acétate de vinyle/éthylène saponifié.

2. Compositions selon la revendication 1, caractérisées en ce que la polyoléfine a une teneur en α-oléfine d'au moins 70% en poids.

3. Compositions selon l'une ou l'autre des revendications 1 et 2, caractérisées en ce que l'acide carboxylique insaturé ou son anhydride est l'acide acrylique ou l'anhydride maléique.

4. Compositions selon l'une quelconque des revendications précédentes, caractérisées en ce que l'acide carboxylique insaturé ou son anhydride entre pour 0,04 à 1% en poids.

5. Compositions selon l'une quelconque des revendications précédentes, caractérisées en ce que le copolymère acétate de vinyle/éthylène saponifié a une teneur en éthylène pouvant varier entre 26 à 45 moles % et un degré de saponification d'au moins 98%.

6. Compositions selon l'une quelconque des revendications précédentes, caractérisées en ce que le copolymère acétate de vinyle/éthylène saponifié a une vitesse d'écoulement à la fusion, selon la norme ASTM-D569-59 (190°C, charge de 2160 g) allant de 0,1 à 20 g/10 minutes.

7. Compositions selon l'une quelconque des revendications précédentes, caractérisées en ce que le copolymère acétate de vinyle/éthylène saponifié a un point de fusion supérieur à celui de la polyoléfine.

8. Compositions selon l'une quelconque des revendications précédentes, caractérisées en ce que le plastifiant est choisi parmi la glycérine, la triéthanolamine, le polyéthylène glycol et l'éther de glycéryle de polyéthylène glycol.

9. Compositions selon l'une quelconque des revendications précédentes, caractérisées en ce qu'elles comportent de 70 à 99 parties en poids de la polyoléfine modifiée, de 30 à 1 parties en poids du copolymère acétate de vinyle/éthylène saponifié et de 1 à 100 parties en poids du plastifiant pour 100 parties en poids de copolymère acétate de vinyle/éthylène saponifié.

10. Compositions selon la revendication 9, caractérisée en ce que la quantité de plastifiant peut varier de 1 à 50 parties en poids pour 100 parties en poids du copolymère acétate de vinyle/éthylène saponifié.